# EUROPEAN PATENT SPECIFICATION

(11) **EP 3 852 376 B1**
(45) Date of publication and mention of the grant of the patent: **10.09.2025**
(21) Application number: 18934311.4
(22) Date of filing: 02.11.2018
(51) Int. Cl.: H04N 21/2187, H04N 21/234, H04N 21/236, H04N 21/475, H04N 21/8547

(54) **METHOD AND DEVICE FOR ADJUSTING TIMESTAMP OF LIVE BROADCAST VIDEO**
VERFAHREN UND VORRICHTUNG ZUR ANPASSUNG DES ZEITSTEMPELS EINES LIVE-RUNDFUNKVIDEOS
PROCÉDÉ ET DISPOSITIF DE RÉGLAGE D'ESTAMPILLE TEMPORELLE DE VIDÉO DE DIFFUSION EN DIRECT

(30) Priority: 18.09.2018 CN 201811089865
(43) Date of publication of application: 21.07.2021
(73) Proprietor: Wangsu Science & Technology Co., Ltd., Shanghai 201800 (CN)
(72) Inventor: YOU, Jujun, Shanghai 201800 (CN); ZHUANG, Xiaochuan, Shanghai 201800 (CN)
(74) Representative: Herrero & Asociados, S.L.
(86) International application number: PCT/CN2018/113729
(87) International publication number: WO 2020/056877

(56) References cited:
- EP-A1- 3 448 040
- CN-A- 103 167 342
- CN-A- 103 731 716
- CN-A- 105 846 940
- CN-A- 105 846 940
- CN-A- 106 507 217
- CN-A- 107 147 919
- CN-A- 107 979 777
- ICKIN SELIM ET AL: "VLQoE: Video QoE instrumentation on the smartphone", MULTIMEDIA TOOLS AND APPLICATIONS, KLUWER ACADEMIC PUBLISHERS, BOSTON, US, vol. 74, no. 2, 4 April 2014 (2014-04-04), pages 381 - 411, XP035435171, ISSN: 1380-7501, [retrieved on 20140404], DOI: 10.1007/S11042-014-1919-0

## Description

### FIELD OF THE DISCLOSURE

The present disclosure relates to the field of video processing technology, more particularly, relates to a method and an apparatus for adjusting a timestamp of a live streaming video.

### BACKGROUND

With the development of Internet technologies and the constant rise of broadband access speed, Internet has become an increasingly inseparable part of people's daily life. Watching live streaming videos has become a mainstream form of entertainments. To improve live streaming service quality, operators of live streaming platforms often provide live streaming services through CND (content delivery network) clusters.

When recording a live streaming video, a host terminal may acquire audio/video data, perform image enhancement and beautification and voice noise reduction and suppression on the acquired audio/video data, encode and encapsulate the processed audio/video data, and insert a timestamp to each of audio/video frames of the live streaming video. Then, the host terminal may push a live data stream to a specified edge node of the CDN (also known as push-stream edge node). After the push-stream edge node receives the live data stream, an intermediate node of the CDN may push the live data stream to another specified edge node of the CDN (also known as pull-stream edge node). As such, when an audience wants to watch the live stream, the audience terminal may obtain the corresponding live data stream from the nearest pull-stream edge node. Then, the audio/video frames may be decapsulated, decoded, and played in the order of timestamps.

In the process of implementing the present disclosure, the inventors found the following issues in the existing technology. When the live streaming video is recorded at the host terminal, the timestamps in the audio-video frames of the generated live data stream may increase abruptly or may be out of order due to various reasons. As a result, after the live streaming video is received and played by some audience terminals, issues such as buffering and interruption may occur when playing the live streaming video due to certain player compatibility issues. Thus, stability of playing the live streaming video is poor.

Reference is made to CN 105846940, XP035435171 and CN 106507217, which have been cited in the search report as relating to the state of the art. CN 105846940 relates to a kind of timestamp fault tolerant control method, determine whether the timestamp of current video frame needs to be adjusted based on the very first time stamp difference between current video frame and former frame of video, according to current video frame the described very first time the second time tolerance between at least two frame of video before, is calculated timestamp side-play amount, the timestamp of current video frame is replaced with the timestamp of described former frame of video plus the described time stamp side-play amount. XP035435171 relates to a QoE instrumentation for video streaming, VLQoE. CN 106507217 relates to a kind of processing method of the timestamp of video flowing.

### BRIEF SUMMARY OF THE DISCLOSURE

To solve the problem of the existing technology, the embodiments of the present disclosure provide a method and an apparatus for adjusting a timestamp of a live streaming video. The technical solution includes the following process.

The invention is set out in the appended set of claims.

The technical solution provided by the embodiments of the present disclosure includes the following beneficial effects.

In the embodiments of the present disclosure, the target audio/video frame of the target live streaming video is acquired and the timestamp corresponding to the target audio/video frame is determined. Based on the timestamp corresponding to the audio/video frame preceding the target audio/video frame, whether the timestamp corresponding to the target audio/video frame is abnormal is determined. If abnormal, the timestamp corresponding to the target audio/video frame is adjusted based on the timestamp corresponding to the preceding audio/video frame. As such, for each audio/video frame of the live streaming video, the timestamp corresponding to the audio/video frame may be adjusted based on the timestamp corresponding to the preceding audio/video frame. Further, the timestamp corresponding to a subsequent audio/video frame may be continually adjusted based on the currently adjusted timestamp. Thus, it is ensured that the timestamps of the entire live data stream of the live streaming video are continuously stable, and playing stability of the live streaming video may be improved.

### BRIEF DESCRIPTION OF THE DRAWINGS

In order to more clearly illustrate the technical solutions in the embodiments of the present disclosure, drawings used in the description of the embodiments will be briefly described below. The drawings in the following description are only some embodiments of the present disclosure. Other drawings may also be obtained by those of ordinary skill in the art without inventive work.
FIG. 1 illustrates a network diagram of providing an exemplary live streaming service based on a CDN cluster according to disclosed embodiments;
FIG. 2 illustrates a flow chart of an exemplary method for adjusting a timestamp of a live streaming video according to disclosed embodiments;
FIG. 3 illustrates a schematic diagram of an exemplary apparatus for adjusting the timestamp of the live streaming video according to disclosed embodiments; and
FIG. 4 illustrates a schematic diagram of an exemplary network device according to disclosed embodiments.

### DETAILED DESCRIPTION

To make the objectives, technical solutions, and advantages of the present disclosure clearer, the following further describes the embodiments of the present disclosure in details with reference to the accompanying drawings.

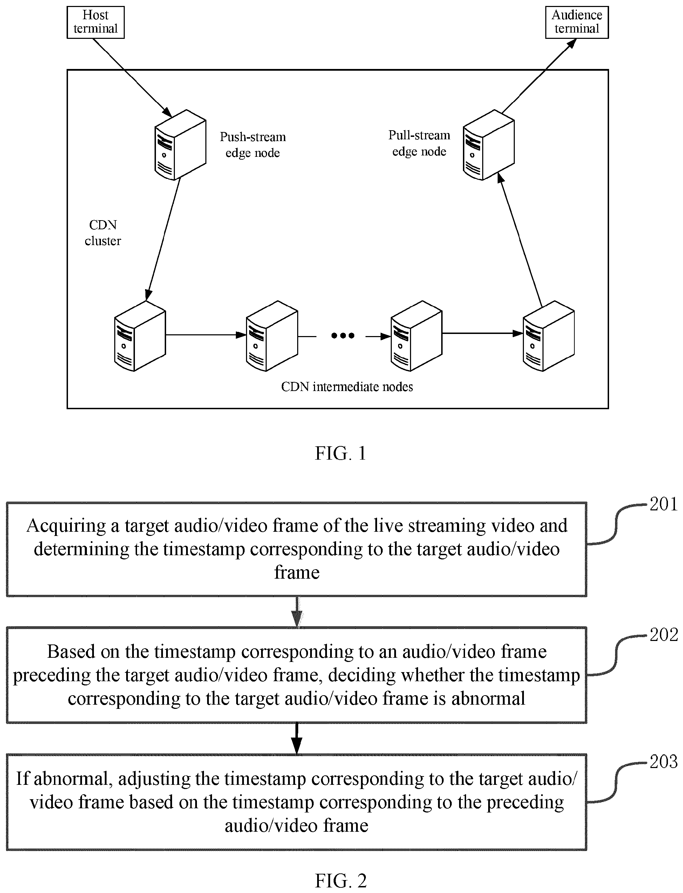

The present disclosure provides a method for adjusting a timestamp of a live streaming video. The method may be performed by a network device. FIG. 1 illustrates a network diagram of providing an exemplary live streaming service based on a CDN cluster according to the present disclosure. The network device may be any device in the network, a host terminal recording the live streaming video, a CDN node (including a push-stream edge node, an intermediate CDN node, and a pull-stream edge node), or an audience terminal configured for playing the live streaming video. The network device may provide a live streaming video processing function for acquiring the live data stream in the form of audio/video frames and processing each of the audio/video frames, respectively. The network device may include a processor, a memory, and a transceiver. The processor may be configured for performing a following process of adjusting the timestamps of the live streaming video. The memory may be configured for storing data required in the process and data generated in the process, such as the timestamp of the preceding audio/video frame, and a criterion for determining an abnormal timestamp, etc. The transceiver may be configured for receiving and transmitting relevant data in the process, such as the audio/video frames of the live streaming video. For illustrative purposes, the push-stream edge node will be described as the network device. In the cases that the network device is another CDN node, the host terminal, or the audience terminal, differences will be described in detail and similarities will be referred but will not be repeated. Further, if the timestamp corresponding to the audio/video frame of the live streaming video has already been adjusted, subsequent network devices in a transmission path of the audio/video frame will not adjust the corresponding timestamp again. In the present disclosure, the "audio/video frame" may be interpreted as the audio frame and the video frame. Only the audio frame is considered when adjusting the timestamp corresponding to the audio frame and only the video frame is considered when adjusting the timestamp corresponding to the video frame.

The flow chart shown in FIG. 2 will be described in detail in the following embodiments.

Step 201: acquiring a target audio/video frame of the live streaming video and determining the timestamp corresponding to the target audio/video frame.

The target audio/video frame may be any one of the audio/video frames in the live data stream of the target live streaming video.

In one embodiment, the host terminal acquires audio and video data that a host user needs to record during a live streaming, generates the live data stream, performs a process of content optimization, encoding and encapsulation, and pushes the finished live data stream to the push-stream edge node specified in the CDN cluster. Taking the target live streaming video as an example, the push-stream edge node may receive the audio and video data of the target live streaming video pushed by the host terminal in units of the audio/video frames. As such, after the target audio/video frame of the target live streaming video is acquired, the target audio/video frame is decapsulated to determine the timestamp corresponding to the target audio/video frame. For each audio/video frame of the target live streaming video, the corresponding timestamp must be determined, and a process of timestamp adjustment must be performed subsequently. If the network device performing the process of the timestamp adjustment is the host terminal, the host terminal may perform step 201 through step 203 on the target audio/video frame after the host terminal encapsulates the target audio/video frame and before the host terminal pushes the target audio/video frame to the push-stream edge node.

In one embodiment, the process of the timestamp adjustment may be performed only on the live streaming video that requires the timestamp adjustment. The process may include acquiring the target audio/video frame of the target live streaming video and determining the timestamp corresponding to the target audio/video frame if the target live streaming video requires the timestamp adjustment.

In one embodiment, the push-stream edge node may be pre-stored with a timestamp adjustment requirement list. The timestamp adjustment requirement list includes records of all the live streaming videos that require the timestamp adjustment. As such, after the push-stream edge node acquires the target audio/video frame of the target live streaming video, the push-stream edge node determines whether the timestamp adjustment is required based on the timestamp adjustment requirement list. If required, the timestamp corresponding to the target audio/video frame is determined and the process of the timestamp adjustment is performed subsequently. In this case, the timestamp adjustment requirement list may be preconfigured by a technician and may be recorded in units of the live streaming platforms. In one example, a record may show which live streaming video of the live streaming platform requires the timestamp adjustment. Alternatively, the timestamp adjustment requirement list may be recorded in units of time periods. For example, a record may show during which time period the process of the timestamp adjustment must be performed on the live streaming videos. If the process of the timestamp adjustment is performed by other network devices, the technician may pre-store the timestamp adjustment requirement list in the network devices that perform the process of the timestamp adjustment.

In one embodiment, whether the process of the timestamp adjustment needs to be performed on the live streaming video is determined based on user's experience of playing the live streaming video. The corresponding process may include acquiring a playing experience evaluation of the target live streaming video and determining whether the target live streaming video requires the timestamp adjustment based on the playing experience evaluation.

In one embodiment, when a user is watching the live streaming video, the operator of the live streaming platform may push an invitation asking the user to provide the playing experience evaluation on the live streaming video. The playing experience evaluations from all users are aggregated and supplied to the network device performing the process of the timestamp adjustment on the live streaming video. For example, the network device is the push-stream edge node. After receiving the playing experience evaluation of the target live streaming video, the push-stream edge node first determines whether the process of the timestamp adjustment has already been performed on the target live streaming video. If not, the push-stream edge node filters the playing experience evaluation with preset key words to obtain the playing experience evaluation relevant to the timestamp adjustment requirement. The number of the relevant playing experience evaluation may be counted. If the counted number exceeds a preset threshold, the target live streaming video requires the timestamp adjustment. The preset key words may include key words that reflect the need for the timestamp adjustment, such as "live streaming incompatible" and "video cannot be played", etc.

Step 202: based on the timestamp corresponding to an audio/video frame preceding the target audio/video frame, deciding whether the timestamp corresponding to the target audio/video frame is abnormal.

In one embodiment, after determining the timestamp corresponding to the target audio/video frame, the push-stream edge node may retrieve the timestamp corresponding to the audio/video frame preceding the target audio/video frame (i.e., the most recent audio/video frame before the target audio/video frame is acquired). According to a preset abnormity determination criterion, the push-stream edge node may decide whether the timestamp corresponding to the target audio/video frame is abnormal based on the timestamp corresponding to the target audio/video frame and the timestamp corresponding to the preceding audio/video frame.

Step 203: if abnormal, adjusting the timestamp corresponding to the target audio/video frame based on the timestamp corresponding to the preceding audio/video frame.

In one embodiment, if it is determined that the timestamp corresponding to the target audio/video frame is abnormal, the push-stream edge node may perform the process of the timestamp adjustment on the timestamp corresponding to the target audio/video frame based on the timestamp corresponding to the preceding audio/video frame. Then, the adjusted target audio/video frame may be encapsulated again and may continue to be transmitted. If it is determined that the timestamp corresponding to the target audio/video frame is normal, the push-stream edge node may directly encapsulate the target audio/video frame again and may continue to transmit the target audio/video frame. In the subsequent transmission process, the target audio/video frame may pass multiple intermediate CDN nodes to reach the pull-stream edge node. Then, the push-stream edge node may transmit the target audio/video frame to the audience terminal. If the push-stream edge node does not perform the process of the timestamp adjustment on the target audio/video frame, the intermediate CDN nodes, the pull-stream node, and the audience terminal may perform the process of the timestamp adjustment.

In one embodiment, if a gap between the timestamp corresponding to the target audio/video frame and the timestamp corresponding to the preceding audio/video frame is too large, it is determined that the timestamp corresponding to the target audio/video frame is abnormal. Correspondingly, the process of the step 203 may include: if the timestamp corresponding to the target audio/video frame is greater than the timestamp corresponding to the preceding audio/video frame and the gap is greater than a preset time difference threshold, the timestamp corresponding to the target audio/video frame is adjusted to a sum of the timestamp corresponding to the preceding audio/video frame and the preset time difference threshold.

In one embodiment, the push-stream edge node may use a differential threshold filtering method to process the timestamps of the live data stream and to prevent a sudden increase in the timestamps. For example, when deciding whether the timestamp corresponding to the target audio/video frame is abnormal, the push-stream edge node may first calculate the gap Δ*t* between the timestamp *tₙ* corresponding to the target audio/video frame and the timestamp *t*_{*n-*1} corresponding to the preceding audio/video frame and may then determine whether the gap Δ*t* is greater than the preset time difference threshold *t*.* If true, it indicates that the timestamp corresponding to the target audio/video frame is abnormal. Then, the push-stream edge node may adjust the timestamp *tₙ* corresponding to the target audio/video frame to the sum of the timestamp *t*_{*n-*1} corresponding to the preceding audio/video frame and the preset time difference threshold *t**, that is *tₙ* = *t*_{*n-*1} *+ t*.*

In one embodiment, if the timestamp corresponding to the target audio/video frame is smaller than the timestamp corresponding to the preceding audio/video frame, it is determined that the timestamp corresponding to the target audio/video frame is abnormal. Correspondingly, the process of the step 203 may include: if the timestamp corresponding to the target audio/video frame is smaller than the timestamp corresponding to the preceding audio/video frame, the timestamp corresponding to the target audio/video frame is adjusted to the timestamp corresponding to the preceding audio/video frame.

In one embodiment, the push-stream edge node may perform a process of incrementing the timestamps on a portion of the live data stream that the timestamps thereof do not increment, thereby avoiding the issue that the live data stream cannot be played due to the out-of-order timestamps. For example, when deciding whether the timestamp corresponding to the target audio/video frame is abnormal, the push-stream edge node may first determine the gap between the timestamp *tₙ* corresponding to the target audio/video frame and the timestamp *t*_{*n-*1} corresponding to the preceding audio/video frame. If the timestamp *tₙ* corresponding to the target audio/video frame is smaller than the timestamp *t*_{*n-*1} corresponding to the preceding audio/video frame, it indicates that the timestamp corresponding to the target audio/video frame is abnormal. At this point, the push-stream edge node may adjust the timestamp *tₙ* corresponding to the target audio/video frame to the timestamp *t*_{*n-*1} corresponding to the preceding audio/video frame, that is, *tₙ* = *t*_{*n*-1}, thereby ensuring that a player can quickly play the live streaming video.

In one embodiment, to improve compatibility with the live streaming player, the timestamps of the entire live data stream may be adjusted by an overall offset to fix an initial value of the timestamps. Correspondingly, the process may include: determining the timestamp corresponding to the first audio/video frame of the acquired target live streaming video and subtracting the timestamp corresponding to the first audio/video frame from the timestamp corresponding to the target audio/video frame to update the timestamp corresponding to the target audio/video frame.

In one embodiment, after acquiring the first audio/video frame of the target live streaming video, the push-stream edge node may record the timestamp corresponding to the first audio/video frame and then may perform timestamp offset adjustment on the live data stream of the target live streaming video based on the recorded timestamp. Taking the target audio/video frame as an example, after acquiring the target audio/video frame, the push-stream edge node may subtract the recorded timestamp corresponding to the first audio/video frame from the timestamp corresponding to the target audio/video frame and then may update the timestamp corresponding to the target audio/video frame to the timestamp resulted from the subtraction. As such, the compatibility of the target live streaming video with the live streaming player may be improved and at the same time the situation that the live streaming player cannot play the live streaming video due to a substantially large initial timestamp of the live data stream may be effectively avoided.

In one embodiment, to ensure audio and video synchronization of the live streaming video, the audio/video frames of the live streaming video may be further adjusted after the step 203. Correspondingly, the process may include adjusting the timestamp corresponding to the target video frame based on the adjustment of the timestamp corresponding to the target audio frame and/or adjusting the timestamp corresponding to the target audio frame based on the adjustment of the timestamp corresponding to the target video frame.

In one embodiment, after adjusting the timestamp corresponding to the target audio frame based on the timestamp corresponding to the preceding audio frame, the push-stream edge node may adjust the timestamp corresponding to the target video frame based on the adjustment of the timestamp of the current audio frame. For example, after the adjustment, the timestamps corresponding to the audio frames of the target live streaming video are shifted forward by 1 second. Then, all the timestamps of the video frames may also be shifted forward by 1 second. Similarly, after adjusting the timestamp corresponding to the target video frame based on the timestamp corresponding to the preceding video frame, the push-stream edge node may adjust the timestamp corresponding to the target audio frame based on the adjustment of the timestamp of the current video frame.

In the embodiments of the present disclosure, the target audio/video frame of the target live streaming video is acquired and the timestamp corresponding to the target audio/video frame is determined. Based on the timestamp corresponding to the audio/video frame preceding the target audio/video frame, whether the timestamp corresponding to the target audio/video frame is abnormal is determined. If abnormal, the timestamp corresponding to the target audio/video frame is adjusted based on the timestamp corresponding to the preceding audio/video frame. As such, for each audio/video frame of the live streaming video, the timestamp corresponding to the audio/video frame may be adjusted based on the timestamp corresponding to the preceding audio/video frame. Further, the timestamp corresponding to a subsequent audio/video frame may be continually adjusted based on the currently adjusted timestamp. Thus, it is ensured that the timestamps of the entire live data stream of the live streaming video are continuously stable, and the playing stability of the live streaming video may be improved.

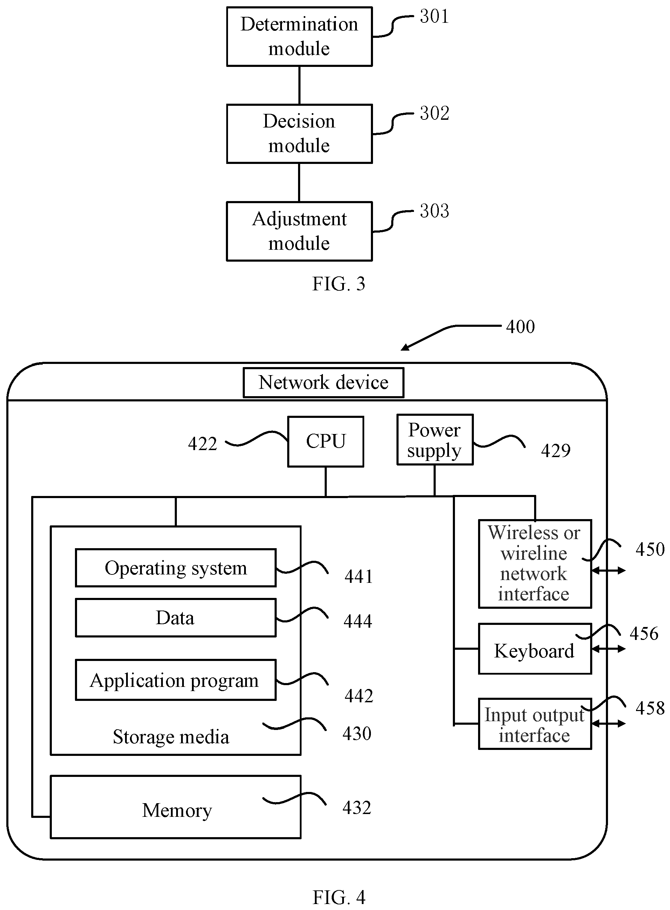

Based on the same technical concept, the embodiments of the present disclosure also provide an apparatus for adjusting the timestamp of the live streaming video. As shown in FIG. 3, the apparatus includes a determination module 301 configured for acquiring the target audio/video frame of the target live streaming video and determining the timestamp corresponding to the target audio/video frame, a decision module 302 configured for deciding whether the timestamp corresponding to the target audio/video frame is abnormal based on the timestamp corresponding to the audio/video frame preceding the target audio/video frame, and an adjustment module 303 configured for adjusting the timestamp corresponding to the target audio/video frame based on the timestamp corresponding to the audio/video frame preceding the target audio/video frame if the timestamp corresponding to the target audio/video frame is abnormal.

In one embodiment, the adjustment module 303 may perform the following process. If the timestamp corresponding to the target audio/video frame is greater than the timestamp corresponding to the preceding audio/video frame and the gap between the two timestamps is greater than the preset time difference threshold, the timestamp corresponding to the target audio/video frame is adjusted to the sum of the timestamp corresponding to the preceding audio/video frame and the preset time difference threshold.

In one embodiment, the adjustment module 303 may perform the following process. If the timestamp corresponding to the target audio/video frame is smaller than the timestamp corresponding to the preceding audio/video frame, the timestamp corresponding to the target audio/video frame is adjusted to the timestamp corresponding to the preceding audio/video frame.

In one embodiment, the adjustment module 303 may further perform the following process. The timestamp corresponding to the first audio/video frame of the acquired target live streaming video is determined. The timestamp corresponding to the target audio/video frame is updated to the timestamp resulted from subtracting the timestamp corresponding to the first audio/video frame from the timestamp corresponding to the target audio/video frame.

In one embodiment, the determination module 301 may perform the following process. The target audio/video frame of the target live streaming video is acquired. If the timestamp adjustment is required for the target live streaming video, the timestamp corresponding to the target audio/video frame may be determined.

In one embodiment, the apparatus also includes a configuration module configured for acquiring the playing experience evaluation of the target live streaming video and determining whether the target live streaming video requires the timestamp adjustment based on the playing experience evaluation.

In one embodiment, the adjustment module 303 is further configured for adjusting the timestamp corresponding to the target video frame based on the adjustment of the timestamp corresponding to the target audio frame and/or adjusting the timestamp corresponding to the target audio frame based on the adjustment of the timestamp corresponding to the target video frame.

In the embodiments of the present disclosure, the target audio/video frame of the target live streaming video is acquired and the timestamp corresponding to the target audio/video frame is determined. Based on the timestamp corresponding to the audio/video frame preceding the target audio/video frame, whether the timestamp corresponding to the target audio/video frame is abnormal is determined. If abnormal, the timestamp corresponding to the target audio/video frame is adjusted based on the timestamp corresponding to the preceding audio/video frame. As such, for each audio/video frame of the live streaming video, the timestamp corresponding to the audio/video frame may be adjusted based on the timestamp corresponding to the preceding audio/video frame. Further, the timestamp corresponding to a subsequent audio/video frame may be continually adjusted based on the currently adjusted timestamp. Thus, it is ensured that the timestamps of the entire live data stream of the live streaming video are continuously stable, and the playing stability of the live streaming video may be improved.

In the embodiments of the present disclosure, for illustrative purposes, the apparatus for adjusting the timestamp of the live streaming video is divided into the functional modules in the description of adjusting the timestamp of the live streaming video. In practical applications, the process of the timestamp adjustment may be partitioned differently according to the actual requirements. That is, the internal structure of the apparatus may be divided into different functional modules and the entire or fractional process of the timestamp adjustment may be performed by the functional modules divided differently. In addition, the embodiments of the apparatus for adjusting the timestamp of the live streaming video are based on the same concept as the embodiments of the method for adjusting the timestamp of the live streaming video. The implementation details of the apparatus may be referred to the embodiments of the method and will not be repeated herein.

FIG. 4 illustrates a schematic diagram of an exemplary network device according to the present disclosure. When being configured differently or performing different functions, the network device 400 may be substantially different. The network device 400 may include one or more central processing units (CPU) 422 (e.g., one or more processors) and memories 432, and one or more storage media 430 (e.g., one or more mass storage devices) for storing application programs 422 and data 444. The memories 432 and the storage media 430 may be volatile memories or persistent memories. The programs stored in the storage media 430 may include one or more above function modules (not shown). Each module may include a series of instructions and operations on the network device 400. Further, the CPU 422 may be configured to communicate with the storage media 430 to execute a series of instructions and operations in the storage media 430 on the network device 400.

The network device 400 may further include one or more power supplies 429, one or more wireless or wireline network interfaces 450, one or more input output interfaces 458, one or more keyboards 456, and/or one or more operating systems 441, such as Windows Server, Mac OS X, Unix, Linux, and FreeBSD, etc.

The network device 400 may include memories and one or more programs. The one or more programs may be stored in the memories. The one or more processors may be configured to execute one or more programs including the instructions for adjusting the timestamp of the live streaming video.

It should be understood by those skilled in the art that all or a portion of the steps of the above described embodiments may be implemented in hardware or in a computer program to instruct relevant hardware. The embodiments of the present disclosure may be implemented in the computer program. The computer program may be stored in a computer readable storage medium. The storage medium may be a read-only memory, a magnetic disk, or an optical disk, etc. The computer program may include instructions to instruct a computer (e.g., a personal computer, a server, or a networking device, etc.) to perform the entire or a portion of the method described in the embodiments of the present disclosure.

It should be understood by those skilled in the art that the foregoing are merely certain preferred embodiments of the present disclosure and are not intended to limit the present invention.

## Claims

1. A method for adjusting a timestamp of a live streaming video, comprising:
aggregating playing experience evaluations from all users;
if the process of the timestamp adjustment has not been performed on a live streaming video, filtering the playing experience evaluations with preset key words and counting the number of filtered playing experience evaluations;
if the counted number exceeds a preset threshold, the live streaming video requires the timestamp adjustment;
acquiring (201) a target audio/video frame of the live streaming video, if the live streaming video requires the timestamp adjustment, determining the timestamp corresponding to the target audio/video frame, wherein the target audio/video frame includes an audio frame and a video frame, wherein only the audio frame is considered when adjusting the timestamp corresponding to the audio frame and only the video frame is considered when adjusting the timestamp corresponding to the video frame;
based on the timestamp corresponding to an audio/video frame preceding the target audio/video frame, deciding (202) whether the timestamp corresponding to the target audio/video frame is abnormal; and
if abnormal, adjusting (203) the timestamp corresponding to the target audio/video frame based on the timestamp corresponding to the preceding audio/video frame.

2. The method of claim 1, wherein if abnormal, adjusting the timestamp corresponding to the target audio/video frame based on the timestamp corresponding to the preceding audio/video frame includes:
if the timestamp corresponding to the target audio/video frame is greater than the timestamp corresponding to the preceding audio/video frame and a gap between the two timestamps is greater than a preset time difference threshold, adjusting the timestamp corresponding to the target audio/video frame to a sum of the timestamp corresponding to the preceding audio/video frame and the preset time difference threshold.

3. The method of claim 1, wherein if abnormal, adjusting the timestamp corresponding to the target audio/video frame based on the timestamp corresponding to the preceding audio/video frame includes:
if the timestamp corresponding to the target audio/video frame is smaller than the timestamp corresponding to the preceding audio/video frame, adjusting the timestamp corresponding to the target audio/video frame to the timestamp corresponding to the preceding audio/video frame.

4. The method of claim 1, after acquiring the target audio/video frame of the live streaming video, further including:
determining the timestamp corresponding to the first audio/video frame of the acquired target live streaming video and subtracting the timestamp corresponding to the first audio/video frame from the timestamp corresponding to the target audio/video frame to update the timestamp corresponding to the target audio/video frame.

5. The method of claim 1, after adjusting the timestamp corresponding to the target audio/video frame, further including:
adjusting the timestamp corresponding to the target video frame based on the adjustment of the timestamp corresponding to the target audio frame; and/or
adjusting the timestamp corresponding to the target audio frame based on the adjustment of the timestamp corresponding to the target video frame.

6. An apparatus for adjusting a timestamp of a live streaming video, comprising:
a configuration module configured for aggregating playing experience evaluations from all users; if the process of the timestamp adjustment has not been performed on a live streaming video, filtering the playing experience evaluations with preset key words and counting the number of filtered playing experience evaluations; if the counted number exceeds a preset threshold, the live streaming video requires the timestamp adjustment;
a determination module (301) configured for acquiring a target audio/video frame of a target live streaming video, if the live streaming video requires the timestamp adjustment, determining the timestamp corresponding to the target audio/video frame, wherein the target audio/video frame includes an audio frame and a video frame, wherein only the audio frame is considered when adjusting the timestamp corresponding to the audio frame and only the video frame is considered when adjusting the timestamp corresponding to the video frame;
a decision module configured (302) for deciding whether the timestamp corresponding to the target audio/video frame is abnormal based on the timestamp corresponding to an audio/video frame preceding the target audio/video frame; and
an adjustment module configured (303) for adjusting the timestamp corresponding to the target audio/video frame based on the timestamp corresponding to the preceding audio/video frame if the timestamp corresponding to the target audio/video frame is abnormal.

7. The apparatus of claim 6, wherein the adjustment module is configured to:
if the timestamp corresponding to the target audio/video frame is greater than the timestamp corresponding to the preceding audio/video frame and a gap between the two timestamps is greater than a preset time difference threshold, adjust the timestamp corresponding to the target audio/video frame to a sum of the timestamp corresponding to the preceding audio/video frame and the preset time difference threshold; and
if the timestamp corresponding to the target audio/video frame is smaller than the timestamp corresponding to the preceding audio/video frame, adjust the timestamp corresponding to the target audio/video frame to the timestamp corresponding to the preceding audio/video frame.

8. The apparatus of claim 6, wherein the adjustment module is configured to:
determine the timestamp corresponding to the first audio/video frame of the acquired target live streaming video and update the timestamp corresponding to the target audio/video frame to the timestamp resulted from subtracting the timestamp corresponding to the first audio/video frame from the timestamp corresponding to the target audio/video frame.

9. The apparatus of claim 6, wherein the adjustment module is configured to:
adjust the timestamp corresponding to the target video frame based on the adjustment of the timestamp corresponding to the target audio frame; and/or
adjust the timestamp corresponding to the target audio frame based on the adjustment of the timestamp corresponding to the target video frame.

10. A computer readable storage medium, wherein:
the storage medium stores at least one instruction or at least one program, one code set, or one instruction set, wherein the at least one instruction, at least one program, one code set, or one instruction set is executed by a processor to implement the method for adjusting the timestamp of the live streaming video of any of claims 1-5.

## Patentansprüche

1. Verfahren zur Anpassung eines Zeitstempels eines Live-Rundfunkvideos, umfassend:
das Aggregieren von Wiedergabeerfahrungsbewertungen aller Benutzer;
falls der Vorgang der Zeitstempelanpassung bei einem Live-Rundfunkvideo noch nicht durchgeführt wurde, das Filtern der Wiedergabeerfahrungsbewertungen anhand voreingestellter Schlüsselwörter und das Zählen der gefilterten Wiedergabeerfahrungsbewertungen;
wobei, wenn die gezählte Anzahl einen voreingestellten Schwellenwert überschreitet, das Live-Rundfunkvideo eine Zeitstempelanpassung erfordert;
das Erfassen (201) eines Ziel-Audio-Videoframes des Live-Rundfunkvideos, falls das Live-Rundfunkvideo eine Zeitstempelanpassung erfordert, und das Bestimmen des dem Ziel-Audio-Videoframe entsprechenden Zeitstempels, wobei der Ziel-Audio-Nideoframe einen Audioframe und einen Videoframe umfasst, wobei bei der Anpassung des dem Audioframe entsprechenden Zeitstempels ausschließlich der Audioframe berücksichtigt wird und bei der Anpassung des dem Videoframe entsprechenden Zeitstempels ausschließlich der Videoframe berücksichtigt wird.
auf der Grundlage des dem einem Ziel-Audio-/Videoframe vorausgehenden Audio-/Videoframe entsprechenden Zeitstempels das Entscheiden (202), ob der dem Ziel-Audio-/Videoframe entsprechende Zeitstempel abnormal ist; und
falls dieser abnormal ist, das Anpassen (203) des dem Ziel-Audio-/Videoframe entsprechenden Zeitstempels auf der Grundlage des dem vorausgehenden Audio-Videoframe entsprechenden Zeitstempels.

2. Das Verfahren nach Anspruch 1, wobei, falls der dem Ziel-Audio- /Videoframe entsprechende Zeitstempel abnormal ist, das Anpassen des dem Ziel-Audio-Videoframe entsprechenden Zeitstempels auf der Grundlage des dem vorausgehenden Audio-/Videoframe entsprechenden Zeitstempels Folgendes umfasst:
falls der dem Ziel-Audio-Nideoframe entsprechende Zeitstempel größer ist als der dem vorausgehenden Audio-Videoframe entsprechende Zeitstempel und eine Lücke zwischen den beiden Zeitstempeln größer ist als ein voreingestellter Zeitdifferenzschwellenwert, das Anpassen des dem Ziel-Audio-Videoframe entsprechenden Zeitstempels auf eine Summe aus dem dem vorausgehenden Audio-/Videoframe entsprechenden Zeitstempel und dem voreingestellten Zeitdifferenzschwellenwert.

3. Das Verfahren nach Anspruch 1, wobei, falls der dem Ziel-Audio- /Videoframe entsprechende Zeitstempel abnormal ist, das Anpassen des dem Ziel-Audio-Videoframe entsprechenden Zeitstempels auf der Grundlage des dem vorausgehenden Audio-/Videoframe entsprechenden Zeitstempels Folgendes umfasst:
falls der dem Ziel-Audio-Nideoframe entsprechende Zeitstempel kleiner ist als der dem vorausgehenden Audio-/Videoframe entsprechende Zeitstempel, das Anpassen des dem Ziel-Audio-/Videoframe entsprechenden Zeitstempels auf den dem vorausgehenden Audio-Videoframe entsprechenden Zeitstempel.

4. Das Verfahren nach Anspruch 1, wobei nach dem Erfassen des Ziel-Audio-Nideoframes des Live-Rundfunkvideos ferner umfasst:
das Bestimmen des dem ersten Audio-/Videoframe des erfassten Ziel-Live-Rundfunkvideos entsprechenden Zeitstempels und
das Subtrahieren des dem ersten Audio-/Videoframe entsprechenden Zeitstempels vom dem Ziel-Audio-/Videoframe entsprechenden Zeitstempel, um den dem Ziel-Audio-/Videoframe entsprechenden Zeitstempel zu aktualisieren.

5. Das Verfahren nach Anspruch 1, wobei nach dem Anpassen des dem Ziel-Audio-/Videoframe entsprechenden Zeitstempels ferner umfasst:
das Anpassen des dem Ziel-Videoframe entsprechenden Zeitstempels basierend auf der Anpassung des dem Ziel-Audioframe entsprechenden Zeitstempels; und/oder
das Anpassen des dem Ziel-Audioframe entsprechenden Zeitstempels basierend auf der Anpassung des dem Ziel-Videoframe entsprechenden Zeitstempels.

6. Die Vorrichtung zur Anpassung des Zeitstempels eines Live-Rundfunkvideos, umfassend:
ein Konfigurationsmodul, das konfiguriert ist zum Aggregieren von Bewertungen der Wiedergabeerfahrung aller Benutzer;
wobei, falls der Vorgang der Zeitstempelanpassung bei einem Live-Rundfunkvideo noch nicht durchgeführt wurde, die Bewertungen der Wiedergabeerfahrung anhand voreingestellter Schlüsselwörter gefiltert und die Anzahl der gefilterten Bewertungen gezählt wird;
wobei, wenn die gezählte Anzahl einen voreingestellten Schwellenwert überschreitet, das Live-Rundfunkvideo eine Zeitstempelanpassung erfordert;
Ein Bestimmungsmodul (301), das konfiguriert ist, um einen Ziel-Audio-/Video-Frame eines Ziel-Live-Streaming-Videos zu erfassen, wobei bei Erfordernis einer Zeitstempel-Anpassung des Live-Streaming-Videos der Zeitstempel bestimmt wird, der dem Ziel-Audio-/Video-Frame entspricht, wobei der Ziel-Audio-Nideo-Frame einen Audio-Frame und einen Video-Frame umfasst, wobei bei der Anpassung des dem Audio-Frame entsprechenden Zeitstempels nur der Audio-Frame berücksichtigt wird und bei der Anpassung des dem Video-Frame entsprechenden Zeitstempels nur der Video-Frame berücksichtigt wird;
Ein Entscheidungsmodul (302), das konfiguriert ist, um zu entscheiden, ob der dem Ziel-Audio-Nideo-Frame entsprechende Zeitstempel basierend auf dem dem dem Ziel-Audio-Nideo-Frame vorangehenden Audio-Video-Frame entsprechenden Zeitstempel abnormal ist; und
Ein Anpassungsmodul (303), das konfiguriert ist, um den dem Ziel-Audio-Nideo-Frame entsprechenden Zeitstempel basierend auf dem dem vorangehenden Audio-/Video-Frame entsprechenden Zeitstempel anzupassen, falls der dem Ziel-Audio-/Video-Frame entsprechende Zeitstempel abnormal ist.

7. Die Vorrichtung gemäß Anspruch 6, wobei das Anpassungsmodul derart konfiguriert ist, dass es:
falls der dem Ziel-Audio-/Video-Frame entsprechende Zeitstempel größer ist als der dem vorangehenden Audio-/Video-Frame entsprechende Zeitstempel und eine Differenz zwischen den beiden Zeitstempeln größer als ein voreingestellter Zeitdifferenz-Schwellenwert ist, den dem Ziel-Audio-/Video-Frame entsprechenden Zeitstempel auf die Summe aus dem dem vorangehenden Audio-Nideo-Frame entsprechenden Zeitstempel und dem voreingestellten Zeitdifferenz-Schwellenwert anpasst; und
Wenn der dem Ziel-Audio-Nideo-Frame entsprechende Zeitstempel kleiner ist als der dem vorangehenden Audio-/Video-Frame entsprechende Zeitstempel, wird der dem Ziel-Audio-Video-Frame entsprechende Zeitstempel gemäß dem dem vorangehenden Audio-Nideo-Frame entsprechenden Zeitstempel angepasst.

8. Die Vorrichtung gemäß Anspruch 6, wobei das Anpassungsmodul derart konfiguriert ist, dass es
den dem ersten Audio-/Video-Frame des erfassten Ziel-Live-Streaming-Videos entsprechenden Zeitstempel bestimmt und den dem Ziel-Audio-Video-Frame entsprechenden Zeitstempel aktualisiert, indem es den Zeitstempel erhält, der sich aus der Subtraktion des dem ersten Audio-/Video-Frame entsprechenden Zeitstempels vom dem Ziel-Audio-/Video-Frame entsprechenden Zeitstempel ergibt.

9. Die Vorrichtung gemäß Anspruch 6, wobei das Anpassungsmodul derart konfiguriert ist, dass es
den dem Ziel-Video-Frame entsprechenden Zeitstempel basierend auf der Anpassung des dem Ziel-Audio-Frame entsprechenden Zeitstempels anpasst; und/oder
den dem Ziel-Audio-Frame entsprechenden Zeitstempel basierend auf der Anpassung des dem Ziel-Video-Frame entsprechenden Zeitstempels anpasst.

10. Ein computerlesbares Speichermedium, wobei
das Speichermedium mindestens eine Anweisung oder mindestens ein Programm, einen Satz von Codes oder einen Satz von Anweisungen speichert, wobei die mindestens eine Anweisung, mindestens ein Programm, ein Satz von Codes oder ein Satz von Anweisungen von einem Prozessor ausgeführt wird, um das Verfahren zur Anpassung des Zeitstempels des Live-Streaming-Videos gemäß einem der Ansprüche 1 bis 5 umzusetzen.

## Revendications

1. Procédé de réglage d'un estampillage temporel d'une vidéo de diffusion en direct, comprenant :
l'agrégation des évaluations d'expérience de lecture de tous les utilisateurs ;
si le processus de réglage du estampillage temporel n'a pas encore été effectué sur une vidéo de diffusion en direct, le filtrage des évaluations de l'expérience de reproduction en fonction de mots-clés prédéfinis et le comptage des évaluations de l'expérience de reproduction filtrées ;
dans lequel, si le nombre compté dépasse un seuil préétabli, la vidéo de diffusion en direct nécessite un réglage du estampillage temporel ;
l'acquisition (201) d'une trame audio/vidéo cible de la vidéo de diffusion en direct, si la vidéo de diffusion en direct nécessite un ajustement de l'estampillage temporel, et la détermination de l'estampillage temporel correspondant à la trame audio/vidéo cible,
dans lequel l'image audio/vidéo cible comprend une image audio et une image vidéo, l'image audio étant exclusivement prise en compte lors du réglage de l'estampillage temporel correspondant à l'image audio, et l'image vidéo étant exclusivement prise en compte lors du réglage de l'estampillage temporel correspondant à l'image vidéo.
sur la base de l'estampillage temporel correspondant à l'image audio/vidéo précédant une image audio/vidéo cible, décider (202) si l'estampillage temporel correspondant à l'image audio/vidéo cible est anormal ; et si elle est anormale, le réglage (203) de l'estampillage temporel correspondant à l'image audio/vidéo cible sur la base de l'estampillage temporel correspondant à l'image audio/vidéo précédente.

2. le procédé selon la revendication 1, dans lequel, si l'estampillage temporel correspondant à l'image audio/vidéo cible est anormal, le réglage de l'estampillage temporel correspondant à l'image audio/vidéo cible sur la base de l'estampillage temporel correspondant à l'image audio/vidéo précédente comprend :
si l'estampillage temporel correspondant à l'image audio/vidéo cible est supérieur à l'estampillage temporel correspondant à l'image audio/vidéo précédente et si un écart entre les deux estampillages temporels est supérieur à un seuil de différence temporelle préétabli, le réglage de l'estampillage temporel correspondant à l'image audio/vidéo cible à la somme de l'estampillage temporel correspondant à l'image audio/vidéo précédente et du seuil de différence temporelle préétabli.

3. le procédé selon la revendication 1, dans lequel, si l'estampillage temporel correspondant à l'image audio/vidéo cible est anormal, le réglage de l'estampillage temporel correspondant à l'image audio/vidéo cible sur la base de l'estampillage temporel correspondant à l'image audio/vidéo précédente comprend :
si l'estampillage temporel correspondant à l'image audio/vidéo cible est inférieur à l'estampillage temporel correspondant à l'image audio/vidéo précédente, le réglage de l'estampillage temporel correspondant à l'image audio/vidéo cible par rapport à l'estampillage temporel correspondant à l'image audio/vidéo précédente.

4. le procédé selon la revendication 1, dans lequel, après la capture de l'image audio/vidéo cible de la vidéo de diffusion en direct, il comprend en outre
la détermination de l'estampillage temporel correspondant à la première image audio/vidéo de la vidéo de diffusion en direct cible capturée, et
la soustraction de l'estampillage temporel correspondant à la première image audio/vidéo de l'estampillage temporel correspondant à l'image audio/vidéo cible afin de mettre à jour l'estampillage temporel correspondant à l'image audio/vidéo cible.

5. le procédé selon la revendication 1, dans lequel, après le réglage de l'estampillage temporel correspondant à l'image audio/vidéo cible, il comprend en outre :
le réglage de l'estampillage temporel correspondant à l'image vidéo cible sur la base du réglage de l'estampillage temporel correspondant à l'image audio cible ; et/ou
le réglage de l'estampillage temporel correspondant à l'image audio cible sur la base du réglage de l'estampillage temporel correspondant à l'image vidéo cible.

6. Le dispositif de réglage de l'estampillage temporel d'une vidéo de diffusion en direct, comprenant:
un module de configuration configuré pour agréger les évaluations de l'expérience de reproduction de tous les utilisateurs ;
dans lequel, si l'opération de réglage de l'estampillage temporel n'a pas encore été effectuée sur une vidéo de diffusion en direct, les évaluations de l'expérience de reproduction sont filtrées à l'aide de mots-clés prédéfinis et le nombre d'évaluations de l'expérience de reproduction filtrées est compté ; et si le nombre compté dépasse un seuil prédéfini, la vidéo de diffusion en direct nécessite un réglage de l'estampillage temporel.
Un module de détermination (301) configuré pour acquérir une trame audio/vidéo cible d'une vidéo de diffusion en direct cible, dans lequel, lorsqu'un ajustement du réglage de l'estampillage temporel de la vidéo de diffusion en direct est requis, l'estampillage temporel correspondant à la trame audio/vidéo cible est déterminé, la trame audio/vidéo cible comprenant une trame audio et une trame vidéo, seule la trame audio étant prise en compte lors du réglage de l'estampillage temporel correspondant à la trame audio, et seule la trame vidéo étant prise en compte lors du réglage de l'estampillage temporel correspondant à la trame vidéo ;
un module de décision (302) configuré pour décider si l'estampillage temporel correspondant à l'image audio/vidéo cible est anormal sur la base de l'estampillage temporel correspondant à l'image audio/vidéo précédente à l'image audio/vidéo cible ; et
un module de réglage (303) configuré pour régler l'estampillage temporel correspondant à l'image audio/vidéo cible sur la base de l'estampillage temporel correspondant à l'image audio/vidéo précédente si l'estampillage temporel correspondant à l'image audio/vidéo cible est anormal.

7. le dispositif selon la revendication 6, dans lequel le module de réglage est configuré pour :
si l'estampillage temporel correspondant à l'image audio/vidéo cible est supérieur à l'estampillage temporel correspondant à l'image audio/vidéo précédente et si une différence entre les deux estampillages temporels est supérieure à un seuil de différence temporelle préétabli, régler l'estampillage temporel correspondant à l'image audio/vidéo cible sur la somme de l'estampillage temporel correspondant à l'image audio/vidéo précédente et du seuil de différence temporelle préétabli ; et
Si l'estampillage temporel correspondant à l'image audio/vidéo cible est inférieur à l'estampillage temporel correspondant à l'image audio/vidéo précédente, l'estampillage temporel correspondant à l'image audio/vidéo cible est réglé conformément à l'estampillage temporel correspondant à l'image audio/vidéo précédente.

8. Le dispositif selon la revendication 6, dans lequel le module de réglage est configuré pour :
déterminer l'estampillage temporel correspondant à la première trame audio/vidéo de la vidéo en direct cible acquise et pour mettre à jour l'estampillage temporel correspondant à la trame audio/vidéo cible en obtenant l'estampillage temporel résultant de la soustraction de l'estampillage temporel correspondant à la première trame audio/vidéo de l'estampillage temporel correspondant à la trame audio/vidéo cible.

9. le dispositif selon la revendication 6, dans lequel le module de réglage est configuré pour :
régler l'estampillage temporel correspondant à l'image vidéo cible sur la base du réglage de l'estampillage temporel correspondant à l'image audio cible ; et/ou
régler l'estampillage temporel correspondant à l'image audio cible sur la base du réglage de l'estampillage temporel correspondant à l'image vidéo cible.

10. Un support de stockage lisible par ordinateur, dans lequel :
le support de stockage enregistre au moins une instruction ou au moins un programme, un ensemble de codes ou un ensemble d'instructions, dans lequel la au moins une instruction, au moins un programme, un ensemble de codes ou un ensemble d'instructions est exécuté par un processeur afin de mettre en œuvre le procédé de réglage de l'estampillage temporel de la vidéo de diffusion en direct selon l'une quelconque des revendications 1 à 5.
